# EUROPEAN PATENT APPLICATION

(11) **EP 1 010 580 A2**
(43) Date of publication of application: **21.06.2000**
(21) Application number: 99931579.9
(22) Date of filing: 06.07.1999
(51) Int. Cl.: B60R 5/00, B60P 7/14

(54) **LUGGAGE COMPARTMENT PROTECTOR**

(30) Priority: 07.07.1998 MX 9805492
(71) Applicant: Consorcio G Grupo Dina, S.A. de C.V., Mexico, D.F. 03100 (MX)
(72) Inventor: MERCADO VALENCIA, Francisco, Corredor Ind. s/n, Ciudad Sahagún, Hidalgo 43990 (MX)
(74) Representative: Frohwitter, Bernhard, Dipl.-Ing.
(86) International application number: MX9900020
(87) International publication number: WO0001555

(57) **Abstract**

A luggage compartment protector of the modular kind which may be used either for inter-state buses or in personnel transportation buses, being comprised of a rectangular shaped frame with a central reinforcement located in the luggage compartment, in order to prevent the luggage from hitting the luggage compartment door or the body structure, which may produce damaging deformations to the luggage or to the vehicle. The protector is secured by means of a lock which, when released will allow the luggage compartment protector to be lowered outwards the vehicle to an angle of 180°, and containing at least two stops mounted on the hinges, the stops contact the body preventing the luggage compartment protector frame from hitting the structure and damaging the vehicle.

## Description

### BACKGROUND OF THE INVENTION

This invention refers to an assembly fitted in the luggage compartment of a bus as an improved protector having as main features that the luggage and packages inside the luggage compartment will not hit the luggage compartment door, thereby preventing a damaging deformation of the same, or damages either to the door mechanism or to the door itself. This damages may impair the correct opening of the door. Furthermore, the protector may be used both for inter-state busts and personnel transportation buses.

The present invention refers to the development of a luggage compartment protector to be fitted, preferentially, in interstate buses or in personnel transportation buses. The protector is of stylized shape and can be assembled in the same assembly line regardless of the kind of bus it is intended to be fitted to, either interstate or personnel transportation buses, or any other buses of the conventional kind.

As already known by anyone skilled in the art, suburban and inter-state buses are defined as buses with construction, design, use and accessories intended to the transportation of passengers and luggage along the highways network, either in short journeys between near cities or in long journeys along highways.

In view of their sizes and inner space this kind of buses can also be adapted to other needs, such as for moving homes, moving hospitals, etc., so they require a luggage compartment that is appropriate for said circumstances.

The luggage compartment is located at the lower part of the vehicle body taking advantage of the spaces being formed by the own structure of said body. In general, said spaces are big and are not always filled up with luggage.

### DETAILED DESCRIPTION

The luggage compartment protector object of this invention is located inside the luggage compartment of the vehicle and it works by opening a lock provided for that purpose, upon opening the lock it releases a latch which in turn allows the luggage compartment protector to be lowered outwards and at angle of 180 degrees, pivoting outwards by means of hinges located in the lower part of the luggage protector frame in order to prevent said frame from hitting the structure and the luggage compartment floor and damaging the vehicle, this is achieved by stops located in the hinges, said stops contact the structure first.

Another aspect of the present invention is to device a luggage compartment protector of the kind known as modular assemblies, since it can be manufactured by assembling sub-assembly parts which, in this case, are common to all the different models of interstate and personnel transporting buses as well as conventional buses. The protector is comprised of at least:
a luggage compartment protector made up of a rectangular frame of curved corners and a reinforcement perpendicularly located between the two long sides of the rectangle and preferably being made of steel tubing, joined together by high resistance arc welding;
two steel hinges, right and left, set up on the luggage compartment floor and on one of the sides of the frame; the luggage compartment has four bores used to mount the hinges to the corresponding side by means of screws and bolts of different rates and sizes;
a frame front side on which a base plate is located at the top of it, the base plate is of irregular shape and will be processed with a tropical weather finishing, being preferably made of high resistance steel;
a lock mounted on the base plate by means of rated screws and nuts, allowing the luggage compartment protector to be lowered outwards at an angle of 180 degrees;
two stops preferably made of neoprene rubber and located on the hinges by means of rated screws and nuts, in order to prevent the frame from hitting the vehicle structure and damaging the floor moldings of the vehicle upon rotating 180 degrees to the open position;
a latch holder being mounted on the top of the base plate of irregular shape and to be used as a complement for the lock;
a latch mounted on the latch bolder by means of rated screws and nuts and high resistance welding, to be used to prevent the luggage compartment protector from opening when the vehicle is traveling.

The various parts making up the luggage compartment protector of the present invention are preferably manufactured from high resistance steel tubing and plates, being joined together by high resistance arc-welding or by any other appropriate bonding operation.

The parts making up the luggage compartment protector structure of the present invention contains bores to be used in attaching various sub-assemblies joined together or joined to the luggage compartment of the bus by means of screws and nuts of different sizes and rates.

The parts making up the luggage compartment protector of the present invention can also be manufactured from other high resistance materials, such as, but not limited to, aluminum and black rolled metal sheets.

Now, one embodiment of the invention will be described along with the accompanying drawings, wherein:
Figure 1 shows an isometric view at 30° of the luggage compartment protector in the open position;
Figure 2 shows a side view of the luggage compartment protector showing the closed and open positions of the frame.

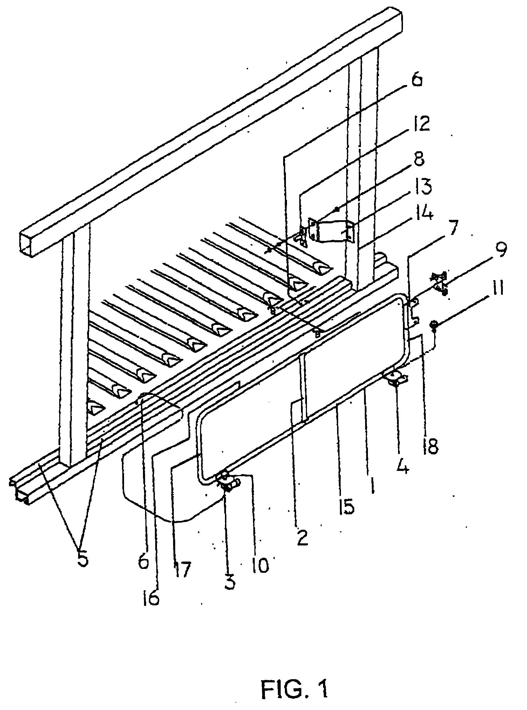

Making reference to Figure 1 of the accompanying drawings, an isometric view at 30° of the luggage compartment protector is shown, wherein the rectangular shaped frame (1) is comprised of two sides, bottom (15) and top (16), and two lateral sides, left (7) and right (8); connecting the bottom (15) and top (16) sides there is at least one central reinforcement (2) perpendicular to the bottom (15) and top (16) sides, thereby forming the main structure of the luggage compartment protector.

On the bottom side (15) two steel hinges are located, left (3) and right (4), which are also attached to the luggage compartment floor (5) of the vehicle, said luggage compartment floor (5) carries four bores (6) which will be used to attach the hinges to the corresponding side. On the left (3) and right (4) hinges a left stop (10) and a right stop (11) are respectively arranged.

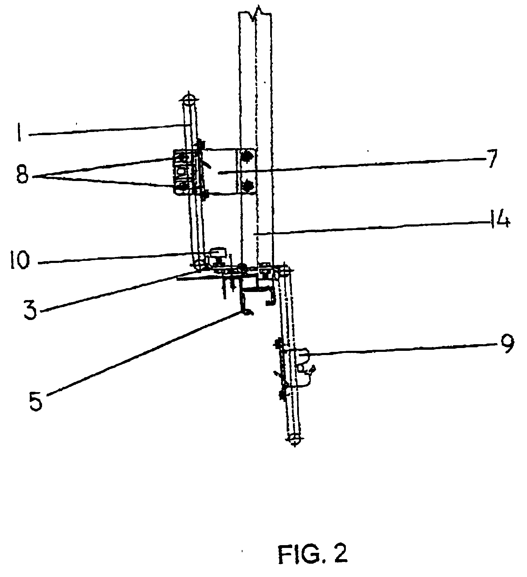

On the right side (18), at the top, a base plate (7) is mounted, the plate has two bores (8) as shown in Figure 2, used to attach lock (9) by means of rated screws and nuts.

On the lateral side of the vehicle body (14), there is a latch holder (13) on which a latch (12) is mounted. The latch jointly with the lock (9) will prevent the luggage compartment protector from opening once the vehicle is moving.

Making reference to Figure 2 of the accompanying drawings, a side view of the rectangular frame (1) is shown, indicating the closed position with solid lines and the open position with interrupted lines, wherein: in the close position, where the lateral side of the vehicle body (14) is appreciated, base plate (7) is secured by two bores (8); the rectangular frame (1) is shown with lock (9) set up on it, the luggage compartment floor (5) profile is shown having the right hinge (13) and the right stop (10) mounted thereon.

In the open position, that is when the rectangular frame (1) is lowered 180° outwards the vehicle, lock (9) is shown in the open position.

Since various modifications may be made to the present invention as already described and since many of them will apparently improve the scope and spirit of the claims, without departing from the true scope and the spirit of the invention, it is intended that all the subject matter contained in the specification be construed in an illustrative and not limitative way.

## Claims

1. A luggage compartment protector containing at least:
a rectangular shaped frame comprised of a bottom and a top side and two lateral sides, left and right; connecting the bottom and the top sides there is at least a central reinforcement perpendicular to said bottom and top sides, thereby forming the main structure of the luggage compartment protector frame;
the rectangular shaped frame is secured to the luggage compartment floor of the vehicle by means of hinges, thereby allowing the frame to be lowered at least 180° outwards the vehicle in order to allow the introduction of luggage;
the rectangular shaped frame secured to the luggage compartment floor of the vehicle by means of the hinges is taken to its closed position by means of a locking mechanism which keeps the door locked when the vehicle is traveling and prevents the luggage from moving and damaging the vehicle structure.

2. A luggage compartment protector as claimed in claim 1, comprising at least one rectangular shaped frame being attached to the luggage compartment floor by means of hinges secured to the bottom side of frame and to the luggage compartment floor of the vehicle.

3. A luggage compartment protector as claimed in claim 1, wherein the luggage compartment floor has bores being used to attach the hinges for the at least one rectangular shaped frame.

4. A luggage compartment protector as claimed in claim 1, wherein on the hinges of the rectangular shaped frame stops are arranged in order to prevent the frame from hitting the vehicle structure and damaging the floor moldings of the vehicle when opening the frame 180°.

5. A luggage compartment protector as claimed in claim 1, comprising at least one rectangular shaped frame on which at the top of the right side a base plate is arranged, the plate has two bores by means of which the lock will be set up.

6. A luggage compartment protector as claimed in claim 1, containing at least one rectangular shaped frame being secured to the base plate by means of a lock.

7. A luggage compartment protector as claimed in claim 1, wherein the latch holder on which the latch is mounted jointly with the lock will prevent the luggage compartment protector frame from being opened when the vehicle is traveling.

8. A luggage compartment protector as claimed in claim 1, wherein the latch holder is mounted in the bottom part of the side of the vehicle body and will be used as a complement for the lock.

9. A luggage compartment protector containing at least:
a rectangular shaped frame comprised of two sides, bottom and top, two lateral sides, left and right; connecting the top and bottom sides there are at least two central reinforcements being perpendicular to said top and bottom sides, thereby forming the main structure of the luggage compartment protector frame;
the rectangular shaped frame is secured by means of hinges to floor or to the ceiling of the vehicle luggage compartment, allowing the frame to be opened at least 180° upwards or downwards and outwards of the vehicle in order to allow the introduction of luggage;
the rectangular shaped frame is attached by means of hinges to the floor or the ceiling of the luggage compartment vehicle, the frame is closed by means of a locking mechanism which keeps it secured when the vehicle is traveling, preventing the luggage from moving and damaging the vehicle structure.

10. A luggage compartment protector containing at least:
a rectangular shaped frame comprised of two sides, a lower and a bottom, two lateral sides, left and right; connecting the left and right lateral sides there is at least one central reinforcement perpendicular to said left and right sides, thereby forming the main structure of the luggage compartment protector frame;
the rectangular shaped frame is secured by means of hinges to the floor or the ceiling of the vehicle luggage compartment, allowing the frame to be opened at least 180° upwards or downwards and outwards the vehicle in order to allow the introduction of luggage;
the rectangular shaped frame secured by means of hinges to the floor or the ceiling of the vehicle luggage compartment, is closed by means of a locking mechanism which keeps it secured when the vehicle is traveling, thereby preventing the luggage from moving and damaging the vehicle structure.

11. A luggage compartment protector containing at least:
a rectangular shaped frame comprised of two sides, top and bottom, two lateral sides, left and right; connecting the top and bottom sides there is a central reinforcement perpendicular to said top and bottom sides, thereby forming the main structure of the luggage compartment protector frame;
the rectangular shaped frame is secured by means of hinges to the lateral side of the vehicle body, at the luggage compartment, allowing the frame to be lowered at least 180° outwards the vehicle in order to allow the introduction of luggage;
the rectangular shaped frame secured by means of hinges to luggage compartment of the vehicle, is closed by means of a locking mechanism which keeps it secured when the vehicle is traveling, thereby preventing the luggage from moving and damaging the vehicle structure.

12. A luggage compartment protector containing at least:
a rectangular shaped frame comprised of two sides, top and bottom, two lateral sides, left and right; connecting the top and bottom sides and connecting the left and right sides there is located at least one central reinforcement perpendicular to said top and bottom sides and to said left and right sides, thereby forming the main structure of the luggage compartment protector frame;
the rectangular shaped frame is secured by means of hinges to the lateral side of the vehicle body, at the luggage compartment, allowing the frame to be opened sidewise at least at 180° outwards the vehicle in order to allow the introduction of luggage;
the rectangular shaped frame secured arranged by means of hinges to the lateral side of the vehicle body, at the luggage compartment, is closed by means of a locking mechanism which keeps it secured when the vehicle is traveling, preventing the luggage from moving and damaging the vehicle structure.
